## Europäisches Patentamt

## European Patent Office

## Office européen des brevets

(11) Veröffentlichungsnummer: **0 438 615 A1**

# EUROPÄISCHE PATENTANMELDUNG

(21) Anmeldenummer: 90101287.2

(22) Anmeldetag: 23.01.90

(51) Int. Cl.⁵: **B23K 37/04**, B23K 26/00

(43) Veröffentlichungstag der Anmeldung:
31.07.91 Patentblatt 91/31

(84) Benannte Vertragsstaaten:
AT BE CH DE DK ES FR GB GR IT LI LU NL SE

(71) Anmelder: **THYSSEN INDUSTRIE AG MASCHINENBAU**
**Stockumer Strasse 28, Postfach 63 20**
**W-5810 Witten 6 (Annen)(DE)**

(72) Erfinder: **Jäck, Kurt**
**Bändelstockweg 4**
**W-7960 Aulendorf(DE)**

(74) Vertreter: **Beyer, Rudi**
**Patentanwalt Dipl.-Ing. Rudi Beyer Am**
**Dickelsbach 8**
**W-4030 Ratingen 6 (Hösel)(DE)**

(54) Einrichtung zum Verbinden von mindestens zwei Blechen durch wenigstens eine durch eine Laserstrahlschweissvorrichtung hergestellte Schweissnaht.

(57) Die Erfindung betrifft eine Einrichtung zum Verschweißen geometrisch unterschiedlich gestalteter, ein- oder doppelseitig beschichteter Blechtafeln mit gleichen oder unterschiedlichen Blechdicken, insbesondere für den Kfz-Karosseriebau, durch Laserstrahlschweißvorrichtungen.

EP 0 438 615 A1

# EINRICHTUNG ZUM VERBINDEN VON MINDESTENS ZWEI BLECHEN DURCH WENIGSTENS EINE DURCH EINE LASERSTRAHLSCHWEISSVORRICHTUNG HERGESTELLTE SCHWEISSNAHT

Die Erfindung betrifft eine Einrichtung zum Verbinden von mindestens zwei Blechen durch eine Schweißnaht, die durch eine Laserstrahlschweißvorrichtung hergestellt ist.

Durch die EP-OS 0 151 848 ist eine Einrichtung zum mechanischen Beschneiden der Enden von Blechbahnen vorbekannt, die anschließend durch eine Laserstrahlschweißvorrichtung miteinander verschweißt werden. Durch diese Einrichtung ist lediglich das Anschweißen der Bandenden von Blechwickeln möglich. Dagegen ist es mit einer solchen Einrichtung nicht möglich, Blechtafeln unterschiedlicher geometrischer Gestaltung und/oder unterschiedlicher Dicke, wie sie z. B. im Karosseriebau für die Automobilindustrie benötigt werden, miteinander zu verschweißen.

Der Erfindung liegt die Aufgabe zugrunde, eine Einrichtung gemäß der vorausgesetzten Gattung dahingehend zu verbessern, daß sich mindestens zwei Bleche von ggf. unterschiedlichen geometrischen Abmessungen und/oder unterschiedlichen Dicken in hohen Stückzahlen miteinander verbinden lassen, bei sauberer Ausgestaltung der Laserstrahlschweißnaht.

Die Aufgabe wird durch die **Patentanspruch 1** wiedergegebenen Merkmale gelöst.

Durch die erfindungsgemäße Einrichtung lassen sich insbesondere Kleinbleche wie sie insbesondere im Karosseriebau der Automobilindustrie verwendet werden, und zwar mit unterschiedlicher Geometrie und/oder unterschiedlichen Blechdicken, durch Laserstrahlschweißverfahren sauber miteinander verbinden. Dabei ist eine hohe Ausbringleistung gegeben. Da die Querlänge der Bleche (orthogonal zur Schweißnahtlängsrichtung gemessen) oftmals größer als die Schweißnahtlänge ist, führt dies beim Stand der Technik zu erheblichen Problemen, nicht jedoch bei der erfindungsgemäßen Einrichtung, da sich hierbei praktisch alle im Karosseriebau für die Kfz-Industrie vorkommenden Geometrien und/oder Blechdicken mit hoher Stückzahl und hoher wirtschaftlicher Ausbringung durch Laserstrahlschweißen miteinander verschweißen lassen.

Bei Anwendung einer erfindungsgemäßen Einrichtung ist es auch möglich, zunächst zwei Bleche in einer erfindungsgemäßen Einrichtung miteinander durch Laserstrahlschweißen zu verbinden und anschließend solchermaßen hergestellte Bauteile erneut durch eine erfindungsgemäße Einrichtung hindurch zu schicken oder sie durch eine nachgeschaltete, entsprechend der Erfindung ausgestaltete Einrichtung weiter durchlaufen zu lassen, wo dann diese Baueinheiten durch Laserstrahlschweißen zu einer Einheit miteinander verschweißt werden, die ursprünglich aus insgesamt vier Blechtafeln bestehen. Die so hergestellten Baueinheiten - entweder aus zwei oder mehr Blechen hergestellte Baueinheiten - können dann weiteren Bearbeitungsprozessen, z. B. einem Prägevefahren, nach einer Nahtreinigung, einer Nahtölung usw. zugeführt werden.

Bei der Erfindung ermöglichen die Paletten stets eine saubere Ausrichtung der Blechtafeln zueinander, so daß die Geometrie der Kleinbleche oder dergleichen praktisch keine Rolle spielt. Auch die Nahtlänge in bezug auf die Querabmessungen der Blechtafeln ist für die Ausbildung der Nahtgüte bedeutungslos, da die Ausgangsblechtafeln auf den einzelnen Paletten ausgerichtet, fixiert und anschließend miteinander verschweißt werden können.

Auf diese Weise hat man es in der Hand, alle im praktischen Betrieb vorkommenden Blechtafeln, besonders für die Automobilindustrie im Kfz-Bau, in der jeweils gewünschten Art und Weise miteinander zu verbinden, da die Anordnung und Fixierung auf Paletten eine sehr genaue Ausrichtung der einzelnen Komponenten oder Blechtafeln zueinander und deren Fixierung in der jeweils gewünschten Lage bis zu ihrer Verschweißung durch die Laserstrahlschweißanlage ermöglicht.

In **Patentanspruch 2** ist eine vorteilhafte Ausführungsform beschrieben, bei welcher auf zwei Fördervorrichtungen, die parallel zueinander arbeiten, jeweils zwei Blechtafeln miteinander verschweißt werden, die anschließend einem mittleren Förderstrang zugeführt werden, wo die solchermaßen hergestellten Bauelemente abermals miteinander im Laserstrahlschweißverfahren sauber und mit hoher Stückleistung miteinander verschweißt werden, bevor sie nachgeschalteten Arbeitsprozessen zugeführt werden.

**Patentanspruch 3** beschreibt eine Einrichtung, bei welcher die durch Laserstrahlschweißverfahren miteinander verbundenen Blechtafeln anschließend weiterverarbeitet werden, z. B. geprägt, gereinigt und geölt werden, bevor die so hergestellten Baugruppen ihren weiteren Verwendungszwecken, z. B. zum Einbau in eine Kfz-Karosserie zugeführt werden.

In **Patentanspruch 4** ist eine bevorzugte Ausführungsform der Erfindung beschrieben, bei welcher die Paletten jeweils durch einen mit Mitnehmern ausgerüsteten Förderer im Bereich der Laserstrahlschweißvorrichtung taktweise der Laserstrahlschweißvorrichtung zugefördert werden.

**Patentanspruch 5** beschreibt die Ausgestaltung der Paletten selbst. Diese können je nach der geometrischen Gestalt der miteinander zu verbindenden Blechtafeln ausgestaltet sein, insbesondere geeignete Fixierungen für Anschläge, Spannvorrichtungen, Rollen, Gleitsteine od. dgl. aufweisen.

In **Patentanspruch 6** ist der Palettenrücktransport beschrieben.

Gemäß **Patentanspruch 7** erfolgt die Zuführung der einzelnen Blechtafeln oder der schon zu Baugruppen miteinander verbundenen Baueinheiten von einer Stapelvorrichtung, von wo aus sie durch einen Roboter dem weiteren Verfahrensablauf zugefördert werden.

In **Patentanspruch 8** ist eine bevorzugte Ausführungsform der Erfindung beschrieben.

In der Zeichnung ist die Erfindung - teils schematisch - an einem Ausführungsbeispiel veranschaulicht. Die in der Zeichnung dargestellten Abmessungen sind für den Erfindungsgedanken (Aufgabe und Lösung) unmaßgeblich; sie können je nach den vorliegenden Betriebsverhältnissen variieren. Es zeigen:

Fig. 1  eine Einrichtung in der Seitenansicht;
Fig. 2  eine Draufsicht zu Fig. 1;

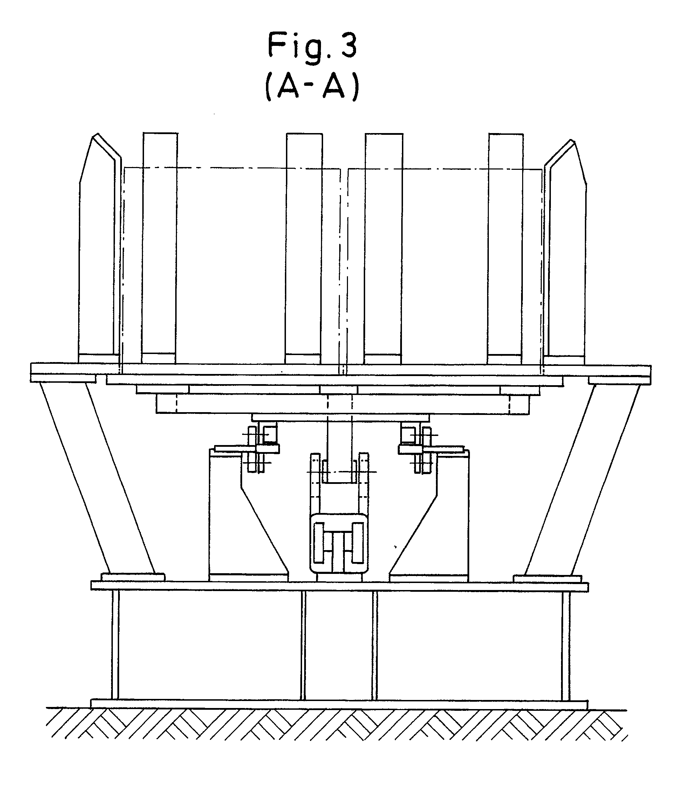

Fig. 3  einen Schnitt nach der Linie A - A der Fig. 1;
Fig. 4  einen Schnitt nach der Linie B - B der Fig. 2;
Fig. 5  eine Ansicht in Richtung des Pfeiles R der Fig. 2.

Die aus der Zeichnung ersichtliche Einrichtung besteht im wesentlichen aus zwei Förderanlagen 1 und 2, die parallel zueinander mit Abstand angeordnet sind und die bei der dargestellten Ausführungsform die gleiche Länge aufweisen. Zentrisch zu diesen beiden Förderanlagen 1 und 2 ist eine dritte Förderanlage 3 mit Abstand nachgeschaltet, an die sich mit rechtwinkliger Förderrichtung eine vierte Förderanlage 4 mit Abstand anschließt.

In den beiden Förderanlagen 1 und 2 sollen jeweils Blechtafeln 5 und 6 sowie 7 und 8 durch je eine Laserschweißnaht miteinander verbunden werden. Wie man erkennt, sind die Blechtafeln 5 bis 7 in der Draufsicht unterschiedlich geometrisch gestaltet. Zum Beispiel weisen die Blechtafeln 5, 6 sowie 8 in der Draufsicht eine trapezförmige Grundgestalt auf, während die Blechtafel 7 in der Draufsicht etwa parallelogrammförmig ausgebildet ist.

Die Blechtafeln 5, 6, 7 und 8 werden jeweils auf getrennten Fördermitteln 9, 10, 11 bzw. 12 den Förderanlagen 1 und 2 zugefördert. Bei den Fördermitteln 9 bis 12 kann es sich um Flurförderer handeln, die in geeigneter Art und Weise angetrieben werden, beispielsweise durch Induktionsschleifen im Boden automatisch betrieben sein können.

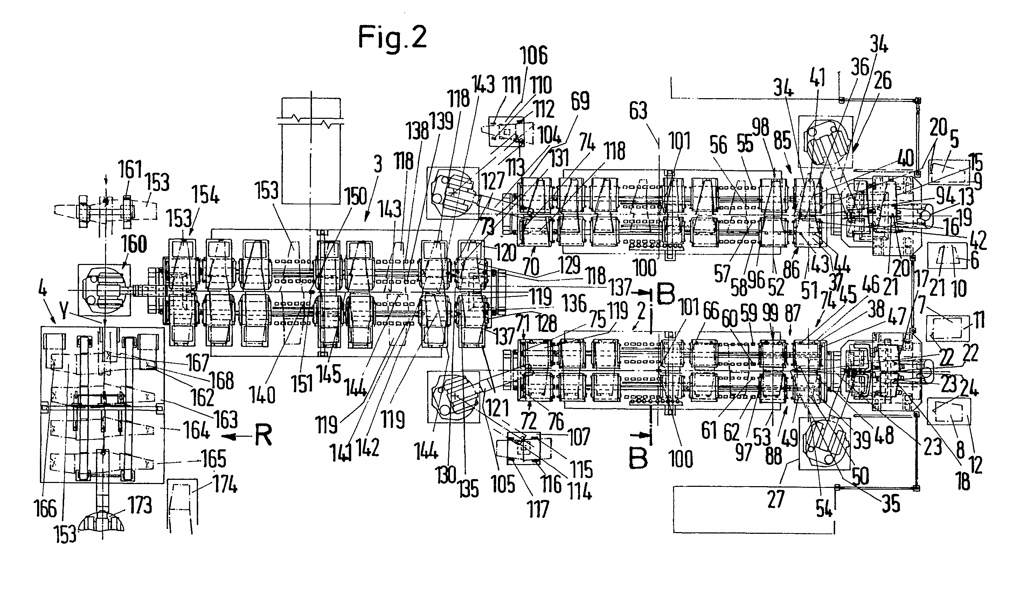

Die Blechtafeln 5, 6 einerseits sowie 7, 8 andererseits werden jeweils durch eine Bedienungsperson 13 bzw. 14 entnommen und in Magazine 15, 16 bzw. 17, 18 von oben eingelegt. Bei der dargestellten Ausführungsform werden die Blechtafeln 5 in das Magazin 15 und die Blechtafeln 6 in das Magazin 16 eingelegt, während die Blechtafeln 7 in das Magazin 17 und die Blechtafeln 8 in das Magazin 18 eingelegt werden. Die Ausbildung der Magazine 15 bis 18 ist so getroffen worden, daß die Blechtafeln 5 bis 8 formmäßig in das jeweils zugeordnete Magazin hineinpassen, so daß keine Blechtafeln in verkehrte Magazine eingelegt werden können. Bei der dargestellten Ausführungsform wird die Blechtafel 5 immer rechts von der Längsmittenachse 19 in das Magazin 15 eingelegt, derart, daß die größere Grundseite 20 parallel zur Längsmittenachse 19 zu liegen kommt, während die Blechtafeln 6 immer so in das Magazin 16 eingelegt werden, daß die schmale Grundseite 21 parallel zur Längsmittenachse 19 verläuft. Dagegen werden die Blechtafeln 7 immer so in das Magazin 17 eingelegt, daß die eine Seite 22 parallel zur Längsmittenachse 23 verläuft, während die Blechtafeln 8 immer so in das Magazin 18 eingelegt werden, daß die Seite 24 parallel zur Längsmittenachse 23 verläuft. Dies ergibt sich deutlich aus der Fig. 2.

Das Einlegen der Blechtafeln kann aber auch durch einen nicht dargestellten Roboter erfolgen, der z. B. mit Saugnäpfen und/oder Greifarmen die betreffenden Blechtafeln 5 bis 8 ergreift und in die zugeordneten Magazine 15 bis 18 einlegt. In diesem Falle läßt sich ein vollautomatischer Ablauf der gesamten Einrichtung erzielen.

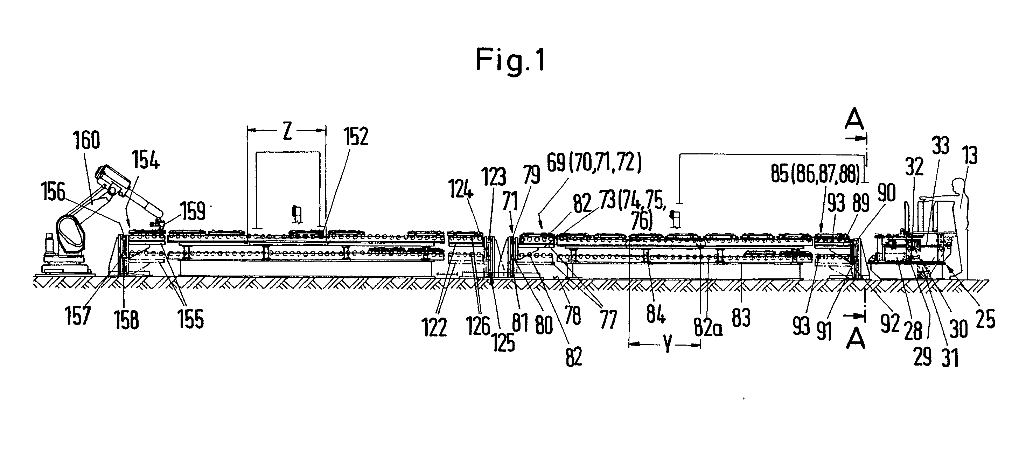

Unterhalb eines jeden Magazins 15, 16 bzw. 17, 18 ist jeweils eine geeignete Fördervorrichtung 25 (Fig. 1) angeordnet, die die Blechtafeln 5 bis 8 in den Aufnahmebereich je eines Roboters 26 bzw. 27 fördern. In Fig. 1 ist lediglich eine solche Fördervorrichtung schematisch in der Seitenansicht dargestellt worden. Sie wird durch eine abwechselnd beidseitig mit Druckmitteldruck, z. B. hydraulisch, beaufschlagte Kolben-Zylinder-Einheit 28 angetrieben, deren Kolbenstange 29 über ein Gelenk 30 mit einer Schwinge 31 verbunden ist, die über eine Kulissenführung 32 mit einem Hubtisch 33 verbunden ist, durch die sich die jeweils unten liegende Blechtafel 5, 6 bzw. 7, 8 aus den Magazinen 15, 16 bzw. 17, 18 in Förderrichtung X in den Wirkungsbereich des betreffenden Roboters 26 bzw. 27 hineinschieben läßt. Von oben rutscht dann der Blechstapel nach, so daß bei jedem Hub der Schwinge 31 eine neue Blechtafel zur Übergabe an den Roboter 26 bzw. 27 zur Verfügung steht.

Die Roboter 26 bzw. 27 besitzen jeweils einen Schwenkarm 34 bzw. 35, der an seinem Ende mittels Saugnäpfen od. dgl. jeweils zwei Bleche 5, 6 bzw. 7, 8 gleichzeitig oder getrennt aufnehmen und auf Paletten 36, 37 bzw. 38, 39 übersetzen kann. Das Übersetzen der Blechtafeln 5, 6 bzw. 7, 8 durch die Roboter 26 bzw. 27 geschieht also in der räumlichen Zuordnung der Blechtafeln jeweils zueinander wie sie bereits in den Magazinen 15, 16 bzw. 17, 18 bestimmt worden ist. Die Feinjustierung und Spannung erfolgt allerdings in der noch zu beschreibenden Art und Weise später.

Auf den Paletten 36, 37 bzw. 38, 39 sind je nach der geometrischen Grundgestalt der darauf aufzulegenden Blechtafeln 5, 6 bzw. 7, 8 geeignete Anschlag- und/oder Zentrierungsmittel vorgesehen. Vorliegend sind beispielsweise Leistenanschläge 40, 41 bzw. 42, 43, 44 bzw. 45, 46, 47 bzw. 48, 49, 50 dargestellt. Selbstverständlich können diese Leistenanschläge 40 bis 50 auch anders ausgebildet sein, beispielsweise Rollen, Nocken, Anlaufschrägen, Zapfen od. dgl. darstellen. Es kommt hier lediglich darauf an, die Blechtafeln 5, 6 bzw. 7, 8 in richtiger räumlicher Zuordnung zu bringen. Außerdem können die Leistenanschläge 40 bis 50 od. dgl. einstellbar ausgebildet sein, so daß sie sich auf alle möglichen geometrischen Grundgestalten der Blechtafeln 5, 6 bzw. 7, 8 einstellen lassen und damit die Verwendungsmöglichkeit der Anlage erweitert ist.

Sobald die Blechtafeln 5, 6 bzw. 7, 8 in der richtigen räumlichen Zuordnung durch die Leistenanschläge 40 bis 50 od. dgl. gebracht worden sind, werden sie durch nicht dargestellte Spannmittel, die der betreffenden Palette 36, 37, 38 oder 39 zugeordnet sind, arretiert, so daß sie ihre Lage in bezug auf die Leistenanschläge od. dgl. nicht mehr verändern können.

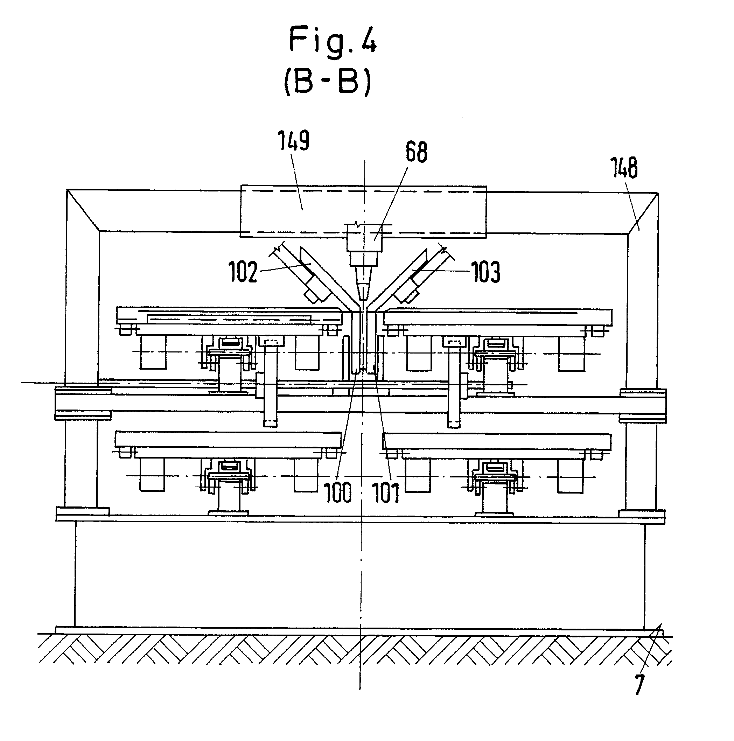

Sowohl an der Förderanlage 1 als auch an der Förderanlage 2 sind mit Abstand eine Vielzahl solcher Paletten 36, 37 bzw. 38, 39 jeweils paarweise und nebeneinander in bezug auf ihre Längsmittenachsen 51, 52 bzw. 53, 54 koaxial angeordnet. Die Paletten 36 bis 39 und auch die anderen an der jeweiligen Förderanlage 1 oder 2 angeordneten Paletten werden durch ein geeignetes Antriebsmittel in Förderrichtung X vorwärts bewegt. Vorliegend weist sowohl die Förderanlage 1 als auch die Förderanlage 2 Friktionsrollenbahnen 55, 56, 57, 58 bzw. 59, 60, 61, 62 auf, die motorisch angetrieben sind und auf denen die Paletten 36, 37 bzw. 38, 39 aufruhen und in Förderrichtung X mitgenommen werden. Bei 63 ist die Mitte der Laserstrahlschweißvorrichtung angedeutet worden. Vor und nach der Mitte 63 der Laserstrahlschweißvorrichtung ist über die Weglänge Y (Fig. 1) eine Fördervorrichtung angeordnet, die über fingerförmige Mitnehmer 64, 65 bzw. 66, 67 die jeweiligen Palettenpaare 36, 37 bzw. 38, 39 ergreifen, um sie nunmehr synchron der Laserstrahlschweißvorrichtung 68 (Fig. 4) hinzuführen. Bis zum Ergreifen der Palettenpaare 36, 37 bzw. 38, 39 durch die fingerförmigen Mitnehmer 64, 65 bzw. 66, 67 brauchen die Palettenpaare 36, 37 bzw. 38, 39 hinsichtlich ihrer Längsmittenachsen 51, 52 bzw. 53, 54 nicht genau koaxial zueinander zugeordnet zu sein, da durch den Friktionsantrieb in Förderrichtung X durchaus Versetzungen möglich sind, was aber für die Funktionsweise unschädlich ist, weil die Koaxialität vor der Laserstrahlschweißvorrichtung 68 durch die erwähnten fingerförmigen Mitnehmer 64 bis 67 herbeigezwungen wird.

Nach dem Passieren der Laserstrahlschweißvorrichtung 68 werden die Paletten 36, 36 bzw. 38, 39 weiter in Förderrichtung X bewegt, wobei sie von den fingerförmigen Mitnehmern 64 bis 67 freikommen und durch den Friktionsrollenbahnen 55, 56, 57, 58 bzw. 59, 60, 61, 62 mitgenommen werden bis zu einer Entladestation 69, 70 bzw. 71, 72, wo die nunmehr einstückigen Blechtafeln 5, 6 bzw. 7, 8 in der noch zu beschreibenden Art und Weise von den zugeordneten Paletten 36, 37 bzw. 38, 39 entnommen und in der gleichfalls zu beschreibenden Art und Weise weiterbehandelt werden.

Jede Entladestation 69 bis 72 weist je eine Hubvorrichtung 73, 74 bzw. 75, 76 auf. Aus Fig. 1 ist zu erkennen, daß jede dieser Hubvorrichtungen 73 bis 76 je einen Hubtisch besitzt, wobei lediglich in Fig. 1 ein Hubtisch mit dem Bezugszeichen 77 bezeichnet worden ist. Jeder der Hubtische 77 ist orthogonal zum Aufstellboden 78 bzw. zu einem Fundament motorisch höhenverstellbar, wobei jeder der Hubtische 77 mit Führungshülsen an einer Stangenführung od. dgl. höhenverstellbar geführt ist. In Fig. 1 sind lediglich die beiden Führungshülsen 79, 80 und die Stangenführung 81 bezeichnet worden. Selbstverständlich können in der Ebene dahinter weitere geeignete Führungsmittel, z. B. Führungshülsen und Stangenführungen, vorgesehen sein. Es ist auch möglich, statt Gleitführungen geeignete andere Führungsmittel, z. B. Spindeltriebe, zu verwenden und die Führungshülsen als Muttern auszubilden, die mit der jeweils als Spindel ausgebildeten Stangenführung 81 kämmen. Statt dessen können auch geeignete abwechselnd beidseitig mit Druckmitteldruck, insbesondere hydraulisch, zu beaufschlagende Kolben-Zylinder-Einheiten verwendet werden.

Die Hubtische 77 und alle andere Hubtische weisen motorisch angetriebene Friktionsrollenbahnen auf, von denen in Fig. 1 lediglich die Friktionsrollenbahn 82 mit einem Bezugszeichen bezeichnet worden ist.

Nachdem die Paletten 36, 37 bzw. 38, 39 entladen worden sind, werden die Paletten durch Überschieben von den Friktionsrollenbahnen 55, 56, 57, 58 bzw. 59, 60, 61, 62 auf die Friktionsrollenbahnen 82 und folgende der Hubtische 77 und folgende auf jeweils eine Ebene abgesenkt, in der die Friktionsrollenbahnen 82 fluchtend zu der jeweiligen Friktionsrollenbahn 55, 56, 57, 58 bzw. 59, 60, 61, 62 zu liegen kommen. Anschließend werden die Friktionsrollenbahnen 82 und folgende der Hubtische 77 und folgende eingeschaltet und die darauf angeordneten Paletten 36, 37 bzw. 38, 39 entgegengesetzt zur Förderrichtung X auf die unterhalb der Friktionsrollenbahnen 55, 56, 57, 58 bzw. 59, 60, 61, 62 befindlichen Friktionrollenbahnen abtransportiert. Von diesen untenliegenden Friktionsrollenbahnen ist in Fig. 1 lediglich eine Friktionsrollenbahn mit einem Bezugzeichen bezeichnet. Diese untenliegenden Friktionsrollenbahnen 82a und folgende liegen somit in einer Ebene, die in der senkrechten Projektion auf die betreffenden Förderanlagen 1, 2 jeweils unter der betreffenden Friktionsrollenbahn 55, 56, 57, 58 bzw. 59, 60, 61, 62 liegt. Zu diesem Zweck sind die Förderanlagen 1, 2 mit geeigneten Stützen versehen, die die oberen Friktionsrollenbahnen 55 bis 62 mit Abstand zu einer Stahlkonstruktion 83 und damit zu den untenliegenden Friktionsrollenbahnen 82 und folgende halten. Von diesen Stützen ist in Fig. 1 lediglich eine Stütze mit dem Bezugszeichen 84 bezeichnet. Aus Fig. 1 erkennt man auch, daß über die Länge der Förderanlagen 1, 2 zahlreiche solcher Stützen 84 angeordnet sind, selbstverständlich auch in der aus Fig. 1 ersichtlichen Zeichenebene dahinter, falls dies nützlich oder vorteilhaft sein sollte.

Die Paletten 36 bis 39 werden somit durch die untenliegenden Friktionsrollenbahnen 82a und folgende wieder an den Ausgangspunkt der Förderanlagen 1, 2 zurückgefördert, wo sie auf eine Friktionrollenbahn je einer Beladestation 85, 86 bzw. 87, 88 zugefördert werden. Die Beladestation weist ebenfalls jeweils einen Hubtisch auf, wobei in Fig. 1 lediglich einer dieser Hubtische mit dem Bezugszeichen 89 bezeichnet ist. Dieser Hubtisch 89 ist prinzipiell aufgebaut wie z. B. der Hubtisch 77 und weist ebenfalls Führungshülsen 90 bzw. 91 auf, die ebenfalls an einer Stangenführung 92 geführt sind. Die Führungshülsen 90, 91 und die Stangenführung 92 können wie die entsprechenden Führungshülsen 79, 80 und wie die Stangenführung 81 aufgebaut sein. Außerdem können auch diese Führungsmittel 90 bis 92 durch andere, z. B. durch Spindeln, Kolben-Zylinder-Einheiten od. dgl., ersetzt werden, wie dies im Zusammenhang mit den Entladestationen 69, 70, 71, 72 und deren Hubtische 77 und folgende beschrieben ist.

Jeder der Hubtische 89 und folgende weist ebenfalls eine motorisch antreibbare Friktionsrollenbahn auf, von denen in Fig. 1 allerdings lediglich die Friktionsrollenbahn 93 veranschaulicht worden ist. Die Ausbildung und Anordnung dieser Friktionsrollenbahnen 93 und folgende ist so wie im Zusammenhang mit der Friktionsrollenbahn 82 beschrieben.

Die ankommenden Paletten 36, 37 bzw. 38, 39 werden somit auf die Friktionsrollenbahnen 93 und folgende übergeschoben und bis zum Anschlag auf den Hubtischen 89 und folgende weitertransportiert. Dadurch erfolgt ein Querausrichten der Paletten 36 bis 39, so daß schon auf diese Weise eine koaxiale Ausrichtung in bezug auf die gemeinsamen Längsmittenachsen 51, 52 bzw. 53, 54 gegeben ist. Sobald die Paletten 36 und folgende auf den Hubtischen 89 und folgende bis zum Anschlag gefahren worden sind, wird der betreffende Hubtisch 89 und folgende angehoben, bis die Friktionsrollenbahnen 93 und folgende in gleicher Höhe wie die zugeordneten Friktionsrollenbahnen 55, 56, 57, 58 bzw. 59, 60, 61, 62 stehen, so daß durch entsprechenden Antrieb der Friktionsrollenbahnen 93 und folgende die Paletten 36 bis 39 wiederum auf die oberen, zugeordneten Friktionsrollenbahnen 55 bis 62 gefördert werden können, von wo aus dann der Zyklus von neuem beginnt, d. h. die Paletten 36 bis 39 werden wiederum durch die zugeordneten Roboter 26 bzw. 27 mit Blechtafeln 5, 6 bzw. 7, 8 beladen.

Nach ihrem Anordnen auf den Paletten 36 bis 39 sind die Blechtafeln 5, 6 bzw. 7, 8 jeweils so zueinander angeordnet, daß sich z. B. zwischen ihren aneinander zugekehrten Grundseiten 20, 21 jeweils ein Spaltabstand 94 bzw. 95 (Fig. 2) befindet. Bei ihrem Transport in Richtung X gelangen die Paletten 36, 37 bzw. 38, 39 in den Bereich eines leistenförmigen Anschlages oder Lineals 96 bzw. 97, wo die Blechtafeln 5, 6 bzw. 7, 8 genau in bezug auf die spätere Schweißnaht zueinander ausgerichtet und anschließend durch noch zu beschreibende Spannrollen, Kniehebelspannvorrichtungen od. dgl. in bezug auf die jeweils zugeordnete Palette 36 bis 39 festgespannt werden. Zum Beispiel kann jede der Paletten 36 bis 39 je eine einschwenkbare Druckrolle aufweisen, die von oben her auf die betreffende Blechtafel 5, 6 bzw. 7, 8 anpreßbar ist. Statt dessen können auch mehrere solcher Druckrollen vorgesehen sein. Es ist aber auch möglich, andere geeignete Arretierungsmittel oder Spannvorrichtungen, z. B. Kniehebelspannvorrichtungen, zu verwenden, die zentral durch Beaufschlagung mit Druckmitteldruck, insbesondere pneumatisch, gesteuert und beaufschlagt werden können, um die Blechtafeln 5, 6 bzw. 7, 8 auf der Palette zu verspannen.

Nach dem Verlassen dieser Station, die sich in Fig. 2 an zweiter Stelle befindet, sind die Blechtafeln 5, 6 einerseits und 7, 8 andererseits zueinander fest fixiert. Dieser Raum ist in Fig. 2 ohne Paletten dargestellt worden. Selbstverständlich ruhen in diesem Bereich die Blechtafeln 5, 6 bzw. 7, 8 nicht auf den Friktionsrollen 55, 56, 57, 58 einerseits sowie 59, 60, 61, 62 andererseits auf, sondern befinden sich immer noch auf den Paletten 36, 37 bzw. 38, 39, die lediglich aus Gründen der Vereinfachung in der Draufsicht in Fig. 2 nicht alle veranschaulicht sind, aber aus der Seitenansicht aus Fig. 1 deutlich auch in dieser Position erkannt werden können. Zu diesem Zweck kann mindestens jeweils eine der Paletten, z. B. 36 und 38 in Richtung des Pfeiles 98 bzw. 99 gegen das Lineal 96 bzw. 97 verschoben werden. Vorteilhafterweise sind aber jeweils paarweise zueinander zusammengehörige Paletten 36, 37 bzw. 38, 39 gegen das zugeordnete Lineal 96, 97 verschiebbar. Zu diesem Zweck können die Paletten 36 bis 39 jeweils selbst als Wagen ausgebildet sein, so daß ihre obere tischförmige Spannfläche gegenüber dem Untergrund auf Rollen, Leistenführungen od. dgl. verschiebbar und in der jeweils gewünschten Stellung arretierbar ist. Nach dem Verlassen des Linealbereiches 96, 97 sind die Blechtafeln 5, 6 bzw. 7, 8 relativ genau zueinander ausgerichtet, so daß beim Ablegen der Blechtafeln 5, 6 bzw. 7, 8 auf den zugeordneten Paletten 36 bis 39 aufgetretene Ungenauigkeiten beseitigt sind. Auf diese Weise ist es unter anderem auch möglich, unterschiedliche Geometrien der Blechtafeln 5, 6 bzw. 7, 8 ohne weiteres in den Griff zu bekommen, um saubere Schweißnähte, wie sie für den Automobilkarosseriebau od. dgl. benötigt werden, herzustellen. Die Blechtafeln 5 bis 8 sind somit nach dem Verlassen der Lineale 96 und 97 so ausgerichtet, daß sie später stumpf gegeneinander geschoben werden können, auch bei unterschiedlich dicken Blechtafeln.

Kurz vor dem Passieren der Mitte der Laserstrahlschweißvorrichtung 63 werden die Blechtafeln 5, 6 einerseits sowie 7, 8 andererseits stirnseitig stumpf gegeneinander gefahren, was durch entsprechende Verstellung der dafür vorgesehenen Teile der Paletten 36 bis 39 geschehen kann. In dieser Lage werden dann die Paletten 36 bis 39 arretiert und der Laserstrahlschweißvorrichtung 68 zugeführt.

Im Bereich der Laserstrahlschweißvorrichtung 68 sind unterhalb der Blechtafeln 5 bis 8 jeweils mit Spaltabstand sowie mit horizontalen Drehachsen zwei Andrück- und Führungsrollen 100, 101 angeordnet, die von beiden Seiten der herzustellen Blechnaht die miteinander zu verschweißenden Blechtafeln 5, 6 bzw. 7, 8 rollend von unten unterstützen, während von oben unter einem Winkel von etwa 45° von jeder Seite eine weitere Andrück- und Führungsrolle 102 bzw. 103 angeordnet ist, die von oben her die Blechtafeln 5, 6 bzw. 7, 8 auf beiden Seiten der Schweißnaht in dem gleichen Streifenbereich rollend unterstützen, an denen auch von unten her die Andrück- und Führungsrollen 100 und 101 zur Anlage kommen. Die oberen Andrück- und Führungsrollen 102 und 103 schließen mithin einen Winkel von etwa 90° (Fig. 4) ein, durch den die Laserstrahlschweißanlage 68 hindurchgreift und die Blechtafel 5, 6 bzw. 7, 8 beim Hindurchfördern kontinuierlich verschweißt.

Nach dem Passieren der Laserstrahlschweißvorrichtung 68 stellen somit die Blechtafeln 5, 6 einerseits sowie 7, 8 andererseits jeweils ein einheitliches Bauteil dar, das als solches auch einheitlich gehandhabt werden kann. Dieses einheitliche Bauteil ist jeweils nach der Laserstrahlschweißanlage 68 in Fig. 2 ohne Paletten 36 bis 39 gezeichnet. Selbstverständlich befindet sich dieses einheitliche Bauteil noch auf den Paletten 36 bis 39. Die Paletten 36 bis 39 wurden lediglich aus Gründen der zeichnerischen Vereinfachung weggelassen. Am Ende der jeweiligen Förderanlage 1 bzw. 2 wird das einheitliche Bauteil durch jeweils einen Roboter 104 bzw. 105 aus den Entladestationen 69, 70 bzw. 71, 72 entnommen und entweder zur visuellen Nahtkontrolle einem Ablegeplatz 106 bzw. 107 zugeführt, oder aber an Beladestationen der dritten Förderanlage 3 übergeben. Die Ablage der Baueinheiten auf den Ablageplätzen 106 bzw. 107 braucht nicht für jede Baueinheit vorgenommen zu werden. Vielmehr kann vorher festgelegt werden, daß nur eine bestimmte Anzahl von Baueinheiten, jeweils sozusagen stichprobenweise, auf den Ablageplätzen 106 oder 107 zur visuellen Nahtkontrolle abgelegt werden.

Die Ablageplätze 106 und 107 weisen ebenfalls geeignete Zentrieranschläge 110, 111, 112, 113 bzw. 114, 115, 116 und 117 auf, um die Baueinheiten immer in derselben Art und Weise auf den Ablageplätzen 106 bzw. 107 durch die Roboter 104 bzw. 105 ablegen zu können.

Die von den Robotern 104 bzw. 105 entweder von den Ablageplätzen 106 bzw. 107 oder von den Förderanlagen 1 bzw. 2 ergriffenen Baueinheiten 118 bzw. 119 werden Beladestationen 120 bzw. 121 zugeführt, die prinzipiell die gleiche Ausbildung wie die Beladestationen 85, 86 bzw. 87, 88 aufweisen können. Die Beladestationen 120 und 121 weisen wiederum je einen Hubtisch auf, von denen lediglich in Fig. 1 einer der Hubtische mit dem Bezugszeichen 122 bezeichnet ist. Der Hubtisch 122 ist orthogonal zum Boden bzw. zum Fundament 78 höhenverstellbar und in der gewünschten Höhenstellung auch arretierbar. Die Höhenverstellung kann in der gleichen Art und Weise wie bei den Beladestationen 85, 86 bzw. 87, 88 und deren Hubtische geschehen, d. h. es kann wiederum entweder ein Elektromotor über einen Spindeltrieb, oder z. B. abwechselnd beidseitig mit Druckmitteldruck, z. B. hydraulisch, beaufschlagte Kolben-Zylinder-Einheiten verwendet werden. In Fig. 1 sind wiederum lediglich zwei Führungshülsen 123, 124 veranschaulicht worden, die an einer Führungsstange 125 geführt sind. Die Führungshülsen 123, 124 können wiederum als Spindelmuttern ausgebildet sein, die mit der dann als Spindel ausgebildeten Führungsstange 125 kämmen. In der Zeichnungsebene dahinter können mehrere solcher Führungshülsen, Führungsstangen od. dgl. angeordnet sein, um den Hubtisch 122 zuverlässig anzutreiben und zu führen.

Dem Hubtisch 122 sind wiederum motorisch angetriebene Friktionsrollenbahnen zugeordnet, von denen aus Fig. 1 lediglich die Friktionsrollenbahn 126 zu erkennen ist. Auf den Friktionsrollenbahnen 126 und folgende ist jeweils eine Palette 127 bzw. 128 angeordnet, die prinzipiell die gleiche Ausbildung und Anordnung aufweisen können wie die Paletten 36, 37 bzw. 38, 39. Auf jeden Fall sind die Paletten 127 und 128 so ausgebildet und angeordnet, daß sie wiederum in der Lage sind, die Baueinheiten 118 und 119 aufzunehmen. Zu diesem Zweck weisen die Paletten 127 und 128 ebenfalls Anschläge bzw. Führungsmittel 129, 130, 131, 134 bzw. 135, 136, 137 auf, die ggf. verstellbar und/oder einstellbar sind. Diese Anschläge oder dergleichen ermöglichen eine genaue Lage der Baueinheiten 118 bzw. 119 auf den Paletten 127 bzw. 128. Statt Anschlägen können auch Rollen, Rollenbahnen, Anschlagstücke oder dergleichen verwendet werden. Die Anschläge oder dergleichen können einstellbar und blockierbar ausgebildet sein, um z. B. die Paletten 127 bzw. 128 auf unterschiedlich geometrisch gestaltete Baueinheiten einrichten zu können.

Die beladenen Paletten 127 bzw. 128 werden nach dem Bewegen des Hubtisches 122 in einer Ebene, in der die Friktionsrollenbahnen 126 und folgende des betreffenden Hubtisches 122 mit Friktionsrollenbahnen 138, 139 bzw. 140, 141 fluchten, durch Einschalten des motorischen Antriebes der Friktionsrollenbahnen 126 und folgende auf die Friktionsrollenbahnen 138 bis 141 abtransportiert und von diesen weiterbewegt. Die Friktionsrollenbahnen 138 bis 141 sind wiederum motorisch angetrieben.

Mit dem Bezugszeichen 142 ist ein leistenförmiger Anschlag bzw. ein Lineal bezeichnet, gegen das die Baueinheiten 118 und 119 mit ihrem einander zugewandten Stirnseiten 143 bzw. 144 durch motorisches Verschieben der betreffenden Teile der Paletten, wie bei den Paletten 36, 37, 38, 39, zur Anlage bringbar sind. Nach dem Verlassen des Lineals 142 sind somit die Stirnseiten 143 und 144 plan parallel zueinander ausgerichtet. Zwischen den Baueinheiten 118 und 119 ist in diesen Positionen noch ein Spaltabstand 145 vorhanden.

Nach dem Ausrichten der Baueinheiten 118 und 119 an dem Lineal 142 werden die Bauheiten 118 und 119, z. B. durch nicht dargestellte, auf die Oberseiten der Baueinheiten 118 und 119 einwirkende Druckrollen, durch Kniehebelspannvorrichtungen oder dergleichen in bezug auf das querverstellbare Teil der Paletten 127 bzw. 128 festgeklemmt, so daß die Baueinheiten 118 und 119 ihre Lage auf den Paletten nicht mehr verändern können.

nen. Auch nach dem Verlassen des Lineals 142 sind Paletten vorhanden. Lediglich aus Gründen der zeichnerischen Vereinfachung wurden in Fig. 2 in der Station nach dem Verlassen des Lineals 142 keine Paletten gezeichnet, die tatsächlich aber dort vorhanden sind.

Kurz vor dem Passieren einer Laserstrahlschweißanlage 146 werden die querverstellbaren Teile der Paletten 127, 128 quer zur Durchlaufrichtung X gegeneinander verschoben, derart, daß die Stirnseiten 143 und 144 stumpf gegeneinander anstoßen.

Der Laser 146 kann die Ausbildung haben, wie er in Zusammenhang mit Fig. 4 und im Zusammenhang mit dem Laser 68 beschrieben wurde.

Die Mitte des Lasers ist mit dem Bezugszeichen 147 bezeichnet worden. Auch dieser Laser 147 kann orthogonal zur Durchlaufrichtung X an einer portalartigen Konstruktion oder dergleichen verschiebbar sein, wie dies nachfolgend im Zusammenhang mit Fig. 4 für den Laser 68 beschrieben wird.

Die Laser 68 der Förderanlagen 1 bzw. 2 sind an einer Portalkonstruktion 148 angeordnet und orthogonal (quer) zur Förderrichtung (X) verschiebbar. Wie aus Fig. 4 erkennbar ist, übergreift die Portalkonstruktion 148 die jeweiligen Friktionsrollenbahnen 55, 56, 57, 58 bzw. 59, 60, 61, 62 und mit Abstand auch die Paletten 36, 37, 38, 39 und die darauf befindlichen Blechtafeln 5, 6 bzw. 7, 8. Die Portalkonstruktion 148 ist über Stützen auf der Konstruktion für die betreffende Förderanlage 1 bzw. 2 im Abstand vom Boden 78 abgestützt.

Der Laser 48 hängt jeweils an einem quer verschieblichen Bauteil 149.

Auch der Laser 146 kann so ausgebildet sein. Die nicht dargestellte Portalkonstruktion übergreift in diesem Falle die Friktionsrollenbahnen 138, 139 bzw. 140, 141 im Abstand oberhalb der Paletten und im Abstand zu den darauf befindlichen Bauteilen 118 bzw. 119.

Auch in diesem Falle sind wiederum Andrück- und Führungsrollen vorgesehen, die von unten gegen die Baueinheiten 118 und 119 beiderseits des Schweißnahtbereiches die blechförmigen Baueinheiten 118 und 119 rollend unterstützen, während von oben her Führungs- und Andrückrollen vorgesehen sind, die in ebensolcher Weise ausgebildet und angeordnet sind wie dies im Zusammenhang mit Fig. 4 und dem Laser 68 beschrieben worden ist. Von den Führungsrollen sind aus Fig. 2 lediglich die Führungs- und Andrückrollen 150 und 151 zu erkennen.

Im Bereich der Laserstrahlschweißvorrichtung 146 ist über das Maß Z wiederum ein Förderer vorgesehen, der fingerförmige Mitnehmer 152 und folgende aufweist, durch die der paarweise Gleichlauf jeweils zweier Paletten 127, 128 mit darauf befindlichen Baueinheiten 118, 119 durch die Laserstrahlschweißanlage 146 erzwungen wird. Mit paarweise wird hierbei wie in allen Ausführungsformen gemeint, daß auf jeder Seite der Längsmittenachse - in Förderrichtung X gesehen - je eine Baueinheit auf je einer Palette angeordnet ist. Ein "Paar" betrifft also zwei Paletten mit zwei Bauheiten, quer zur Förderrichtung X angeordnet.

Durch die Laserstrahlschweißvorrichtung 146 werden die Baueinheiten 118 bzw. 119 miteinander verschweißt. Anschließend übergeben die Mitnehmerfinger 152 die Paletten an die Friktionsrollenbahnen 138, 139 bzw. 140, 141, die dann die einheitliche Baueinheit 153 weiter in Förderrichtung X transportieren, bis sie zu einer Entladestation 154 gelangen, die prinzipiell die gleiche Ausbildung und Anordnung wie die Entladestationen 69, 70 bzw. 71, 72 aufweisen kann.

Die Entladestation weist wiederum einen Hubtisch 155 auf, der orthogonal höhenverstellbar in bezug auf den Boden 78 ist und prinzipiell die gleiche Ausbildung und Anordnung wie die Hubtische 77 der Entladestationen 69, 70 bzw. 71, 72 aufweisen kann, d. h. der Hubtisch weist wiederum Führungshülsen 156, 157 und eine Führungsstange 158 sowie ggf. mehrere Führungshülsen und Führungsstangen in der Ebene dahinter, auf. Statt dessen können auch Kolben-Zylinder-Einheiten oder andere geeignete Getriebemittel, z. B. Spindeltriebe verwendet werden, wie es im Zusammenhang mit den anderen Hubtischen der Entladestationen 69, 70 bzw. 71, 72 schon beschrieben worden ist.

Von der Entladestation werden die Baueinheiten 153 durch den Greifer 159 eines Roboters 160 entnommen und entweder einem Ablageplatz 161 oder der Förderanlage 4 zugeführt. Auf dem Ablageplatz 161 kann eine visuelle Nahtkontrolle der Schweißnaht durchgeführt werden. Hierzu können entweder alle Baueinheiten 153 einer visuellen Nahtkontrolle unterworfen werden, oder aber nur stichprobenweise, z. B. jedes zehnte Bauteil hier abgelegt werden, um die visuelle Nahtkontrolle durchzuführen, während alle anderen Bauteile direkt der Förderanlage 4 durch den Roboter 160 zugeführt werden.

Auf der Förderanlage 4 werden die Baueinheiten 153 in Richtung Y gefördert. Bei der dargestellten Ausführungsform besitzt die Förderanlage 4 vier Stationen, nämlich 162, 163, 164 und 165.

In der Station 162 werden bei dem dargestellten Ausführungsbeispiel die Baueinheiten 153 an den Stellen 166, 167 und 168 durch Prägen mit Sicken versehen. Selbstverständlich können die Sicken auch anderswo angeordnet sein. Zum Beispiel kann die Baueinheit 153 als Bodenblech in einer Kfz-Karosserie dienen, in der an den dafür erforderlichen Stellen die Sicken 166, 167 und 168 eingeprägt werden.

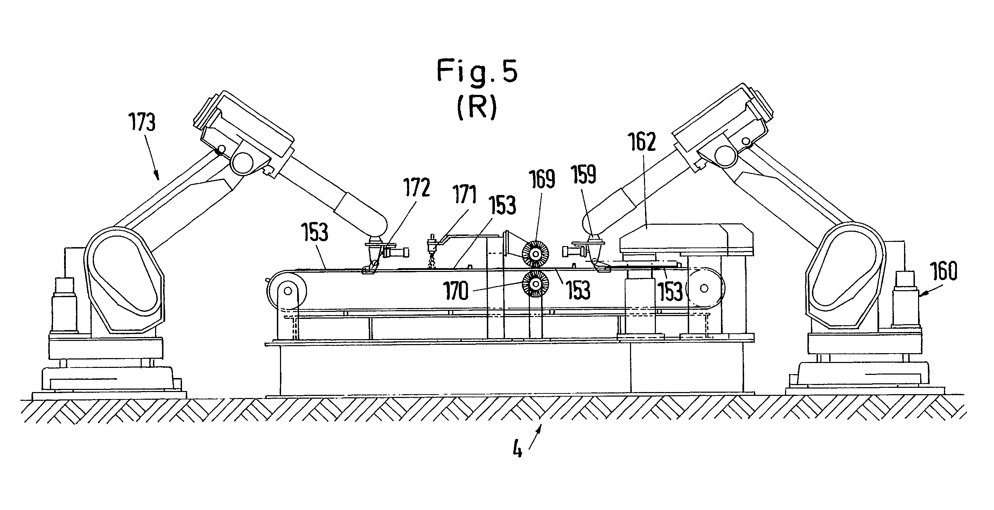

In der Station 163 werden die Schweißnähte gereinigt. Die hierzu erforderliche Vorrichtung ist aus Fig. 5 zu erkennen. Zu diesem Zweck sind im Bereich der Schweißnähte Bürstenpaare angeordnet, von denen aus Fig. 5 lediglich die Bürsten 169, 170 zu erkennen sind. Es handelt sich hierbei um Stahlbürsten, die mechanisch die Schweißnähte von oben und unten bearbeiten.

In der Station 164 werden die gereinigten Schweißnähte geölt. Eine Ölvorrichtung ist bei 171 in Fig. 5 dargestellt.

Die Station 164 stellt die Entnahmestation für das fertige Bauteil 153 dar. Hier werden die fertigen Bauteile 153 durch einen Greifer 172 eines Roboters 173 entnommen und bei 174 abgestapelt.

Die in der Zusammenfassung, in der Beschreibung und in den Patentansprüchen beschriebenen sowie aus der Zeichnung ersichtlichen Merkmale können sowohl einzeln als auch in beliebigen Kombinationen für die Verwirklichung der Erfindung wesentlich sein. **Bezugzeichenliste**

| | |
|---|---|
| 1 | Förderanlage |
| 2 | Förderanlage |
| 3 | Förderanlage |
| 4 | Förderanlage |
| 5 | Blechtafel |
| 6 | Blechtafel |
| 7 | Blechtafel |
| 8 | Blechtafel |
| 9 | Fördermittel |
| 10 | Fördermittel |
| 1 1 | Fördermittel |
| 12 | Fördermittel |
| 13 | Bedienungsperson |
| 14 | Bedienungsperson |
| 15 | Magazin |
| 16 | Magazin |
| 17 | Magazin |
| 18 | Magazin |
| 19 | Längsmittenachse |
| 20 | Grundseite, größere |
| 21 | Grundseite, schmale |
| 22 | Seite |
| 23 | Längsmittenachse |
| 24 | Seite |
| 25 | Fördervorrichtung |
| 26 | Roboter |
| 27 | Roboter |
| 28 | Kolben-Zylinder-Einheit |
| 29 | Kolbenstange |
| 30 | Gelenk |
| 31 | Schwinge |
| 32 | Kulissenführung |
| 33 | Hubtisch |
| 34 | Schwenkarm |
| 35 | Schwenkarm |
| 36 | Palette |
| 37 | Palette |

| | |
|---|---|
| 38 | Palette |
| 39 | Palette |
| 40 | Leistenanschlag, Anschlag |
| 41 | Leistenanschlag, Anschlag |
| 42 | Leistenanschlag, Anschlag |
| 43 | Leistenanschlag, Anschlag |
| 44 | Leistenanschlag, Anschlag |
| 45 | Leistenanschlag, Anschlag |
| 46 | Leistenanschlag, Anschlag |
| 47 | Leistenanschlag, Anschlag |
| 48 | Leistenanschlag, Anschlag |
| 49 | Leistenanschlag, Anschlag |
| 50 | Leistenanschlag, Anschlag |
| 51 | Längsmittenachse |
| 52 | Längsmittenachse |
| 53 | Längsmittenachse |
| 54 | Längsmittenachse |
| 55 | Friktionsrollenbahn |
| 56 | Friktionsrollenbahn |
| 57 | Friktionsrollenbahn |
| 58 | Friktionsrollenbahn |
| 59 | Friktionsrollenbahn |
| 60 | Friktionsrollenbahn |
| 61 | Friktionsrollenbahn |
| 62 | Friktionsrollenbahn |
| 63 | Mitte der Laserstrahlschweißvorrichtung |
| 64 | Mitnehmer, fingerförmiger |
| 65 | Mitnehmer, fingerförmiger |
| 66 | Mitnehmer, fingerförmiger |
| 67 | Mitnehmer, fingerförmiger |
| 68 | Laserstrahlschweißvorrichtung |
| 69 | Entladestation |
| 70 | Entladestation |
| 71 | Entladestation |
| 72 | Entladestation |
| 73 | Hubvorrichtung |
| 74 | Hubvorrichtung |
| 75 | Hubvorrichtung |
| 76 | Hubvorrichtung |
| 77 | Hubtisch |
| 78 | Aufstellboden, Fundament |
| 79 | Führungshülse, Führungsmittel |
| 80 | Führungshülse, Führungsmittel |
| 81 | Stangenführung |
| 82 | Friktionsrollenbahn |
| 82a | Friktionsrollenbahn, untenliegende |
| 83 | Stahlkonstruktion |
| 84 | Stütze |
| 85 | Beladestation |
| 86 | Beladestation |
| 87 | Beladestation |
| 88 | Beladestation |
| 89 | Hubtisch |
| 90 | Führungshülse |
| 91 | Führungshülse |
| 92 | Stangenführung |
| 93 | Friktionsrollenbahn |
| 94 | Spaltabstand |

| | |
|---|---|
| 95 | Spaltabstand |
| 96 | Lineal, Anschlagleiste |
| 97 | Lineal, Anschlagleiste |
| 98 | Pfeil |
| 99 | Pfeil |
| 100 | Andrück- und Führungsrolle |
| 101 | Andrück- und Führungsrolle |
| 102 | Andrück- und Führungsrolle |
| 103 | Andrück- und Führungsrolle |
| 104 | Roboter |
| 105 | Roboter |
| 106 | Ablageplatz |
| 107 | Ablageplatz |
| 108 | - |
| 109 | - |
| 110 | Zentrieranschlag |
| 111 | Zentrieranschlag |
| 112 | Zentrieranschlag |
| 113 | Zentrieranschlag |
| 114 | Zentrieranschlag |
| 115 | Zentrieranschlag |
| 116 | Zentrieranschlag |
| 117 | Zentrieranschlag |
| 118 | Baueinheit |
| 119 | Baueinheit |
| 120 | Beladestation |
| 121 | Beladestation |
| 122 | Hubtisch |
| 123 | Führungshülse |
| 124 | Führungshülse |
| 125 | Führungstange |
| 126 | Friktionsrollenbahn |
| 127 | Palette |
| 128 | Palette |
| 129 | Anschlag |
| 130 | Anschlag |
| 131 | Anschlag |
| 132 | Anschlag |
| 133 | Anschlag |
| 134 | Anschlag |
| 135 | Anschlag |
| 136 | Anschlag |
| 137 | Anschlag |
| 138 | Friktionsrollenbahn |
| 139 | Friktionsrollenbahn |
| 140 | Friktionsrollenbahn |
| 141 | Friktionsrollenbahn |
| 142 | Lineal, leistenförmiger Anschlag |
| 143 | Stirnseite |
| 144 | Stirnseite |
| 145 | Spaltabstand |
| 146 | Laserstrahlschweißvorrichtung |
| 147 | Mitte der Laserstrahlschweißvorrichtung |
| 148 | Portalkonstruktion |
| 149 | Bauteil |
| 150 | Führungs- und Andrückrolle |
| 151 | Führungs- und Andrückrolle |
| 152 | Mitnehmer, fingerförmiger |

| 153 | Baueinheit |
| 154 | Entladestation |
| 155 | Hubtisch |
| 156 | Führungshülse |
| 157 | Führungshülse |
| 158 | Führungsstange |
| 159 | Greifer |
| 160 | Roboter |
| 161 | Ablageplatz |
| 162 | Station |
| 163 | Station |
| 164 | Station |
| 165 | Station |
| 166 | Stelle |
| 167 | Stelle |
| 168 | Stelle |
| 169 | Bürstenpaare |
| 170 | Bürstenpaare |
| 171 | Ölvorrichtung |
| 172 | Greifer |
| 173 | Roboter |
| 174 | Abstapelstation |
| R | Ansichtsrichtung |
| X | Förderrichtung |
| Y | Weglänge |
| Z | Maß |

## Literaturverzeichnis

EP-OS 0 151 848

AT-PS 333 100

DE-OS 20 09 532

DE-OS 32 03 287

DE-PS 23 50 933

DE-PS 29 49 095 PATENT ABSTRACTS OF JAPAN, vol. 5, no. 97, 24th June 1981 & JP - A - 56 41091 (TOKYO SHIBAURA DENKI K.K.) 17-04-1981

PATENT ABSTRACTS OF JAPAN, vol. 6, no. 48, 27th March 1982 & JP - A - 56 163087 (KAWASAKI SEITETSU K.K.) 15-12-1981

PATENT ABSTRACTS OF JAPAN, vol. 7, no. 12, 19th January 1983 & JP - A - 57 168796 (KAWASAKI SEITETSU K.K.) 18-10-1982

## Patentansprüche

1. Einrichtung zum Verbinden von mindestens zwei Blechen durch eine Schweißnaht, die durch eine Laserstrahlschweißvorrichtung hergestellt ist, **dadurch gekennzeichnet,** daß

   a) mindestens eine vorzugsweise als Taktförderanlage ausgebildete Förderanlage (1 bzw. 2) vorgesehen ist;

   b) daß auf jeder Förderanlage (1 bzw. 2) Palettenpaare (36, 37 bzw. 38, 39) nebeneinander förderbar sind und daß auf jeder Palette (36, 37, 38, 39) je mindestens eine Blechtafel (5, 6 bzw. 7, 8) nebeneinander liegen;

c) daß die Paletten (36, 37 bzw. 38, 39) an einem leistenförmigen Anschlag bzw. Lineal (96, 97) herangefördert werden, an das die Grundseiten (20, 21) der Blechtafeln (5, 6 bzw. 7, 8) zur Anlage bringbar sind, um die Blechtafeln (5, 6 bzw. 7, 8) zueinander stirnseitig auszurichten;

d) daß die Blechtafeln (5, 6 bzw. 7, 8) durch je mindestens eine Spannvorrichtung auf der betreffenden Palette (36 bzw. 37) arretierbar, z. B. festklemmbar, sind;

e) daß die Palettenoberteile, auf denen die Blechtafeln (5, 6 bzw. 7, 8) festgeklemmt od. dgl. sind, orthogonal zur Förderrichtung (X) gegeneinander bis zum Anschlag der miteinander zu verschweißenden Grundseiten (20, 21) beweglich sind;

f) daß eine Laserstrahlschweißanlage (68) die stumpf gegeneinander gestoßenen Blechtafeln (5, 6 bzw. 7, 8) miteinander verschweißt und

g) daß die aus jeweils zwei Blechtafeln (5, 6 bzw. 7, 8) durch Zusammenschweißen hergestellten Baueinheiten (118) entweder zunächst einer Nahtkontrolle und/oder einer weiteren, insbesondere als Taktförderanlage ausgebildeten Förderanlage (3) zuführbar sind, wo sie mit weiteren Baueinheiten (119) zusammenschweißbar sind;

h) daß die Paletten (36, 37) unterhalb der Förderbahn für die Blechtafeln (5, 6) durch die gleiche Förderanlage (1 bzw. 2) entgegengesetzt zur Förderrichtung (X) an den Anfangspunkt der Förderanlage zurückführbar sind, wo sie durch eine Hubvorrichtung, insbesondere einem Hubtisch (89) nach ihrem Beladen mit neuen Blechtafeln (5, 6) erneut auf die Förderanlage (1, 2) bringbar sind.

2. Einrichtung nach Anspruch 1, **dadurch gekennzeichnet,**

   a) daß parallel und mit Abstand zu der Förderanlage (1) eine ebensolche Förderanlage (2) angeordnet ist, die in gleicher Richtung parallel zu der ersten Förderanlage (1) fördert, auf der sich ebenfalls Paletten (38, 39) befinden, auf denen gleichfalls vorzugsweise geometrisch unterschiedlich gestaltete Blechtafeln (7, 8) angeordnet sind;

   b) daß die in der ersten (1) und zweiten (2) Förderanlage hergestellten Baueinheiten (118 bzw. 119) einer dritten Förderanlage (3) zuführbar sind, in der die beiden Baueinheiten (118 bzw. 119) auf Paletten (127 bzw. 128) nebeneinander angeordnet sind;

c) daß die Paletten (127, 128) an einen leistenförmigen Anschlag bzw. Lineal (142) herangefördert werden, an das die Stirnseiten (143 bzw. 144) der Baueinheiten (118 bzw. 119) zur Anlage bringbar sind, um die Baueinheiten (118 bzw. 119) zueinander auszurichten;

d) daß die Baueinheiten (118, 119) durch je mindestens eine Spannvorrichtung auf der betreffenden Palette (127 bzw. 128) arretierbar, z. B. festklemmbar, sind;

e) daß die Palettenoberteile, auf denen die Baueinheiten (118 bzw. 119) festklemmbar od. dgl. sind, orthogonal zur Förderrichtung (X) gegeneinander bis zum Anschlag der miteinander zu verschweißenden Stirnseiten (143, 144) beweglich sind;

f) daß eine Laserstrahlschweißanlage (146) die stumpf gegeneinander gestoßenen Baueinheiten (118, 119) miteinander verschweißt und

g) daß die aus jeweils zwei Baueinheiten (118, 119) durch Zusammenschweißen hergestellten Baueinheiten (153) entweder zunächst einer Nahtkontrolle und/oder einer weiteren, insbesondere als Taktförderanlage ausgebildeten Förderanlage (4) zuführbar sind, wo sie weiteren Bearbeitungsvorgängen unterziehbar sind.

3. Einrichtung nach Anspruch 1 oder 2, **dadurch gekennzeichnet,** daß die Baueinheiten (118 bzw. 153) in einer weiteren Vorrichtung mit sickenförmigen Ausprägungen zu versehen sind, bevor die Schweißnähte in einer Vorrichtung gereinigt, geölt und anschließend die fertige Baueinheit (153) entnehmbar ist.

4. Einrichtung nach Anspruch 1 oder einem der folgenden, **dadurch gekennzeichnet,** daß die Paletten (36, 37 bzw. 38, 39 bzw. 127, 128) vor der jeweiligen Laserstrahlschweißvorrichtung (68 bzw. 146) durch eine Transportvorrichtung mit fingerförmigen Mitnehmern (64, 65; 152) durch die Laserstrahlschweißvorrichtung synchron und nebeneinander koaxial durch die Laserstrahlschweißvorrichtung hindurch transportierbar sind.

5. Einrichtung nach Anspruch 1 oder einem der folgenden, **dadurch gekennzeichnet,** daß die Paletten (36, 37, 38, 39 bzw. 127, 128) eine obere Spannfläche aufweisen, die gegenüber einem unteren, von der Förderanlage (1, 2, 3) mitnehmbaren Teil quer zur Förderrichtung (X) verschiebbar und in der jeweiligen Stellung auch arretierbar angeordnet ist.

6. Einrichtung nach Anspruch 1 oder einem der folgenden, **dadurch gekennzeichnet,** daß

a) die Paletten (36, 37, 38, 39, 127, 128) durch Friktionsrollenbahnen (55, 56, 57, 58, 59, 60, 61, 62, 138, 139, 140, 141) mindestens bis in den Bereich der jeweiligen Laserstrahlschweißvorrichtung (68, 146) antreibbar sind und daß im Bereich der Laserstrahlschweißvorrichtung (68, 146) die Transportvorrichtung mit den fingerförmigen Anschlägen (64, 152) den Weitertransport übernimmt, während nach dem Passieren der Laserstrahlschweißvorrichtung (68 bzw. 146) wiederum die jeweiligen Friktionsrollenbahnen (55, 56, 57, 58, 59, 60, 61, 62, 138, 139, 140, 141) die Paletten (36, 37, 38, 39, 127, 128) abfördern;

b) daß an jedem Ende einer jeden Förderanlage (1, 2, 3) je eine Beladestation (85, 86, 87, 88, 120, 121) bzw. eine Entladestation (69, 70, 71, 72, 154) angeordnet ist und daß jede dieser Belade- bzw. Entladestationen (85, 86, 87, 120, 121, 69, 70, 71, 72, 154) je einen Hubtisch (89, 77, 155) aufweist, der in bezug auf den Boden bzw. das Fundament (78) höhenverstellbar ist und die jeweiligen Paletten (36, 37, 38, 39, 127) von der Rückführtransportbahn (82a) auf die Friktionsrollenbahnen (55, 56, 57, 58, 59, 60, 61, 62, 138, 139, 140, 141) übergibt;

c) daß von den Entladestationen (69, 70, 71, 72 bzw. 154) die jeweils fertig geschweißten Baueinheiten (118 bzw. 153) von einem Roboter (104, 105) entweder einer visuellen Nahtkontrolle (106) zuführbar oder einer weiteren Förderanlage (3) zuförderbar sind;

d) daß von der weiteren Förderanlage (3) die Baueinheiten (153) mittels eines Roboters (106) einer visuellen Nahtkontrolle oder einer weiteren Förderanlage (4) zuförderbar sind.

7. Einrichtung nach Anspruch 1 oder einem der folgenden, **dadurch gekennzeichnet,** daß die zu einer Baueinheit (118) miteinander zu verschweißenden Blechtafeln (5, 6 bzw. 7, 8) auf einem Stapeltisch stapelbar sind, aus denen die Blechtafeln (5, 6 bzw. 7, 8) von unten her durch einen Schieber, der durch eine Schwinge (31) angetrieben ist, in den Übernahmebereich eines Roboters (26, 27) bringbar ist und daß die Schwinge (31) elektromotorisch oder durch eine abwechselnd beidseitig mit Druckmitteldruck - pneumatisch oder hydraulisch - beaufschlagte Kolben-Zylinder-Einheit (28) antreibbar ist.

8. Einrichtung nach Anspruch 1 oder einem der folgenden, **dadurch gekennzeichnet,** daß jede Laserstrahlschweißvorrichtung (68, 146) die miteinander zu verschweißenden Blechtafeln (5, 6) bzw. Baueinheiten (118, 119) beiderseits der Schweißnaht von unten durch Andrück- und Führungsrollen (100, 101) als auch von oben durch Andrück- und Führungsrollen (102, 103) rollend abstützt, wobei die oberen Rollen (102, 103) jeweils unter 45° zur Oberfläche der miteinander zu verschweißenden Bleche geneigt angeordnet sind, und daß zwischen den geneigt zueinander angeordneten Andrück- und Führungsrollen (102, 103) die Laserstrahlschweißvorrichtung (68, 146) hindurchgreift.

Fig.1

EP 0 438 615 A1

Fig.2

# Fig. 3
## (A-A)

# Fig.4
## (B-B)

# Fig.5
## (R)

EP 0 438 615 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN vol. 9, no. 261 (M-422)(1984) 18 Oktober 1985, & JP-A-60 108189 (TOYOTA JIDOSHA K.K.) 13 Juni 1985, * das ganze Dokument * | 1-8 | B23K37/04 B23K26/00 |
| A | DE-A-3730434 (KABUSHIKI KAISHA TAMURA SEISAKUSHO) * Spalte 9, Zeilen 15 – 52; Figuren 1-3 * | 1 | |

**RECHERCHIERTE SACHGEBIETE (Int. Cl.5)**

B23K

Der vorliegende Recherchenbericht wurde für alle Patentansprüche erstellt

| Recherchenort | Abschlußdatum der Recherche | Prüfer |
|---|---|---|
| DEN HAAG | 23 SEPTEMBER 1990 | ARAN D.D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

EPO FORM 1503 03.82 (P0403)